## Europäisches Patentamt
## European Patent Office
## Office européen des brevets

(19)

(11) Veröffentlichungsnummer: **0 114 282**
**B1**

(12) **EUROPÄISCHE PATENTSCHRIFT**

(45) Veröffentlichungstag der Patentschrift:
03.09.86

(21) Anmeldenummer: 83112349.2

(22) Anmeldetag: 08.12.83

(51) Int. Cl.⁴: **C 03 C 17/27**, C 23 C 18/00

(54) Verfahren zum Herstellen von Indiumoxid-Zinnoxid-Schichten.

(30) Priorität: 11.01.83 DE 3300589

(43) Veröffentlichungstag der Anmeldung:
01.08.84 Patentblatt 84/31

(45) Bekanntmachung des Hinweises auf die Patenterteilung:
03.09.86 Patentblatt 86/36

(84) Benannte Vertragsstaaten:
BE FR GB IT NL

(56) Entgegenhaltungen:
DE-A-3 215 099
GB-A-2 084 551

SPRECHSAAL, Nr. 5, Mai 1981, Seiten 361-366, Coburg, DE. H. DISLICH et al.: "Tauchschichten aus organometallischen Lösungen, Verfahren, Chemie, Produkte"

(73) Patentinhaber: **Schott Glaswerke, Hattenbergstrasse 10, D-6500 Mainz (DE)**
(84) Benannte Vertragsstaaten: **BE FR IT NL**

(73) Patentinhaber: **Carl- Zeiss- Stiftung trading as SCHOTT GLASWERKE, Hattenbergstrasse 10, D-6500 Mainz 1 (DE)**
(84) Benannte Vertragsstaaten: **GB**

(72) Erfinder: **Arfsten, Nanning J., Dr. Dipl.- Chem., Wingertspfad 3-5, D-6094 Bischofsheim (DE)**
Erfinder: **Kaufmann, Reinhard, Hafenstrasse 16, D-6500 Mainz (DE)**
Erfinder: **Dislich, Helmut, Dr. Dipl.- Chem., Gerhart- Hauptmannstrasse 12, D-6501 Budenheim (DE)**

(74) Vertreter: **Rasper, Joachim, Dr., Bierstadter Höhe 22, D-6200 Wiesbaden (DE)**

## Beschreibung

Die Erfindung betrifft die Herstellung transparenter, elektrisch leitfähiger und Infrarot-Strahlen reflektierender Indium-Zinn-oxid-Schichten (ITO-Schichten) nach dem an sich bekannten Tauchverfahren. Dabei werden Glasscheiben in eine Lösung hydrolysierbarer Verbindungen von Indium und Zinn getaucht, gleichmäßig in eine Wasserdampf enthaltende Atmosphäre herausgezogen, getrocknet und unter Einwirkung einer Reduktionsgasatmosphäre ausgehärtet.

ITO-Schichten sind wegen ihrer Eigenschaftskombination: hohe elektrische Leitfähigkeit, hohe IR-Reflexion bei hoher Sonnenenergietransmission, hohe Transmission im sichtbaren Gebiet, leichte Ätzbarkeit mit Säuren, gute Umweltbeständigkeit, gute Kratzfestigkeit und gute Haftung auf Glas von erheblichem Interesse, auch im Vergleich zu anderen Schichten wie Zinnoxid-, Cadmiumstannat- und dünne Kupfer-, Silber-, Gold-Schichten zwischen dielektrischen Schichten. Diese Schichten sind in der Eigenschaftskombination ITO-Schichten unterlegen.

Im Vakuumverfahren erzeugte, einseitige ITO-Schichten auf Dünnglas haben sich auf dem Displaygebiet (LCD und andere) ganz weitgehend durchgesetzt.

Bei Schichten in der Gebäudeverglasung (Isolierglasfenster) sind die Eigenschaften der hohen Sonnenenergietransmission bei gleichzeitiger hoher IR-Reflexion der langwelligen IR-Strahlung sehr erwünschte Eigenschaften, die ein Fenster zum passiven Solarkollektor werden lassen. Lichttechnisch ist hier die hohe Transmission erwünscht, und nahezu ideale Anforderungsprofile werden von ITO-Schichten erfüllt. Solche Schichten existieren nicht auf dem Markt. Andere Anwendungsgebiete sind Solarzellen (ITO, CdS, CuS), Fotozellen (ITO, PbS), optische Filter, elektrische Beheizung, Antifogging und vieles andere mehr.

Dem Fachmann auf diesen Gebieten ist die Situation geläufig, und es besteht kein Zweifel an der großen Bedeutung der ITO-Schichten, insbesondere unter Einbezug der Umweltbeständigkeit.

Nach dem bekannten Stand der Technik werden ITO-Schichten hergestellt durch Vakuum-Verfahren einschließlich Sputtern. Der apparative Aufwand ist erheblich und die Aufbringrate verhältnismäßig langsam. Daher existiert bis heute keine Großflächenbelegung über mehrere Quadratmeter.

ITO-Schichten werden auch im Sprüh- und CVD-Verfahren aufgebracht. Derart aufgebrachte Schichten sind nicht hinreichend gleichmäßig, wie es für ein Fenster erforderlich ist. Im wesentlichen ist dies auf verschiedene Interferenzfarben bei verschiedener Dicke zurückzuführen. Auch mit diesem Verfahren ist bis heute keine Großflächenbelegung möglich geworden.

Sehr homogene Schichten gleichmäßiger Dicke lassen sich auf großen Glasscheiben im Tauchverfahren aufbringen. Dabei wird die Scheibe in eine Lösung aus hydrolysierbaren Metallverbindungen, wie z.B. Kieselsäureester in Alkohol getaucht, mit gleichmäßiger Geschwindigkeit herausgezogen, dann an der Luft getrocknet und bei 400 - 500°C ausgehärtet und so in eine transparente $SiO_2$-Schicht überführt.

Obwohl Schichten mit einer Vielzahl verschiedener Oxide herstellbar sind (H. Schroeder, Oxide Layers Deposited from Organic Solutions, Physics of Thin Films, Vol. 5, 1969, Academic Press Inc. New York) und auch eine Methode zur Herstellung definierter Mehrkomponentenoxide vorliegt (H.Dislich, Angew. Chem. Internat. Ed. Vol. 10, 1971, Nr. 6, S. 363-370), ist bisher noch keine Lösung für die Aufgabe gefunden worden, hoch-leitfähige und hoch-IR-reflektierende ITO-Schichten in einem Tauchverfahren herzustellen, obwohl dies als erstrebenswertes Ziel anerkannt ist.

Dies geht z. B. aus der US-A 4 252 841 hervor, gemäß welcher dies im Tauchverfahren versucht wurde, und aus der US-A 42 68 539 sowie der GB-A 20 56 433, in denen dies nach anderen Verfahren versucht wurde. Erreicht wurden lediglich Flächenwiderstände von bestenfalls 500 $\Omega/\square$, während zur Erzielung eines verwendbaren technischen Fortschritts das Gebiet von definierten 20 - 30 $\Omega/\square$ für Fenster bzw. 10 - 500 $\Omega/\square$ für Displays erforderlich ist. Auch aus der DE-A- 3 215 099 und der GB-A-2 084 551 ist die Herstellung von transparenten und elektrisch leitfähigen ITO-Schichten bekannt, doch sowohl die einzelnen Verfahrensschritte als auch die damit hergestellten Schichten unterscheiden sich wesentlich von dem erfindungsgemäßen Verfahren und seinen Produkten.

Gemäß der DE-A-3 215 099 wird auf dem Glassubstrat zunächst eine reine $SiO_2$-Sperrschicht aufgebracht, die nachfolgend einer Benetzbarkeitsverbesserungsbehandlung unterworfen wird, d.h. ein Teil der $SiO_2$-Schicht wird abgetragen. Anschließend wird eine Indiumkomplexlösung aufgebracht, bei etwa 350°C getrocknet, und mit UV-Licht bestrahlt und bei 450°C bis 500°C kalziniert.

Die in der GB-A-2 084 551 beschriebenen ITO-Schichten werden direkt auf das Substrat gesprüht und während oder nach dem Aufbringen der Schicht auf Temperaturen zwischen 300°C und dem Erweichungspunkt des Substrats in einer reduzierenden Atmosphäre ($H_2$ / $N_2$ / $O_2$) erhitzt. Für eine praktische Verwertung ist also ein Eigenschaftspaket zu erreichen entsprechend folgenden Zieldaten:

| Eigenschaft | Fenster | Displays |
|---|---|---|
| Flächenwiderstand ($\Omega/\square$) | 20 - 30 | 10 - 500 |
| IR-Reflexion bei 9,5 $\mu$m (%) | 70 - 80 | — |
| Restreflexion im Sichtbaren (%) | — | < 10 |
| Transmission im Sichtbaren (%) | > 80 | > 80 |

Farbwiedergabe neutral ja ja > > ärte,
messing-eisenfest ja ja
  h omogene Schichtdicke ja ja
  glatte Schichten ja ja
  stabil gegen übliche Reinigungsmittel ja ja
  umweltstabil incl. Sonne ja —
  einfäch ätzbar — ja
Nach dem Stand der Technik werden diese Anforderungsprofil im für Großflächenbelegung geeigneten Tauchverfahren nicht erreicht. Es sind nicht einmal wesentliche Schritte in diese Richtung bekannt geworden. Das Tauchverfahren wäre jedoch das Mittel der Wahl, weil es einen hohen Grad der Reproduzierbarkeit der Eigenschaften beinhaltet, vor allem aber, weil gleichzeitig und ohne zusätzlichen Aufwand beider Seiten einer Glasscheibe beschichtet werden, wodurch sie die Funktionstüchtigkeit erheblich erhöht. So wird bei Displays in den sogenannten Doppelzellen die mittlere Scheibe mit ihrer Leitschicht auf beiden Seiten genützt, und bei Fenstern erhöht sich die Funktionstüchtigkeit erheblich, wie aus den folgenden Werten hervorgeht. Für ein Isolierglasfenster aus zwei 6 mm Floatglasscheiben (eine beidseitig belegt) im Abstand von 12 mm, Zwischenraum mit Argon gefüllt, ergeben sich folgende Werte:

Lichttransmission L = 83 %
Gesamtenergiedurchlaß G = 74 %
Wärmedurchgangszahl K = 1,5 W/m²K.

Die besten Werte auf dem Markt befindlicher Systeme betragen derzeit L = 69 %, G = 60 %, K = 1,5 W/m²K.

Der bei Verwendung von ITO-Schichten erzielbare technische Fortschritt ist besonders auffallend bei der Verwendung eines Fensters als passiver Solarkollektor. >nzu kommt, daß die im Tauchverfahren hergestellten ITO-Schichten langzeitstabil gegen Witterungseinflüsse sind, auch dann, wenn eine der beiden Schichten dem freien Raum zugewandt ist.

Ziel der Erfindung ist es daher, ITO-Schichten in einem Tauchverfahren und in einer Qualität herzustellen, die den nach aufwendigeren Verfahren hergestellten Schichten mindestens entspricht (z. B. als Displayschichten), sie in den meisten Fällen jedoch übertrifft (z. B. als Schicht für Gebäudeverglasung). Ein wesentlicher technischer Fortschritt besteht auch darin, daß die hervorragenden Eigenschaften, wie höchste Transparenz (bis 96 % bei 550 nm) und IR-Reflexion von >80 % (bis 85 % bei 9,5μm) gemäß der Erfindung mit dünneren Schichten um 100 nm hergestellt werden können, als dies mit nach dem Stande der Technik hergestellten Schichten der Fall ist.

Das bringt nicht nur den Vorteil der Materialersparnis hinsichtlich des relativ teuren Indiums mit sich, sondern: dünne Schichten sind auch kompakter und widerstandsfähiger. Die hauptsächliche Materialersparnis ergibt sich daraus, daß ITO-Schichten gemäß der Erfindung überhaupt im Tauchverfahren zugängig geworden sind. Bei diesem Verfahren gibt es keinen Abfall an teurem Indium, wie z. B. bei den Sprüh- und CVD-Verfahren, wo ein erheblicher Anteil des aufzubringenden Gutes daneben geht. Das ist auch bei den Vakuumverfahren so, wo das nicht auf dem Substrat befindliche Material allerdings wieder aufgearbeitet werden kann. Beim Verfahren gemäß der Erfindung ist dies mit der Füllung einer Küvette ebenfalls möglich, erfindungsgemäß aber äußerst selten nötig, denn die Lösung wird erfindungsgemäß so eingestellt, daß sie länger als ein Jahr haltbar ist.

Das obengenannte Ziel der Erfindung wird mit einem Verfahren gemäß den Patentansprüchen erreicht.

Die Erfindung umfaßt zum einen die Herstellung von ITO-Tauchlösungen sowie die Herstellung von Tauchlösungen zum Herstellen von Sperrschichten, die gleichzeitig eine wesentliche Verbesserung der Schichteigenschaften der nachfolgend aufgebrachten ITO-Schicht bezüglich der Schichthärte und der Langzeitstabilität bringen, und zum anderen die dazu gehörigen genauen Verfahrensparameter, die eingehalten werden müssen, um definierte Schichteigenschaften zu erhalten.

Eine unbedingt erforderliche Maßnahme zur Erreichung und Erhaltung einer guten Leitfähigkeit und IR-Reflexion auf Glas mit hohem Alkaligehalt, z. B. Floatglas ist das Aufbringen einer Sperrschicht zur Verhütung der Diffusion von Alkaliionen aus dem Grundglas in die nachfolgend aufgebrachte ITO-Schicht. Hierzu könnte im einfachsten Falle zwar eine SiO₂-Schicht im Tauchverfahren aufgebracht werden, jedoch ist die Lebensdauer der darauf aufgebrachten ITO-Schichten recht begrenzt. Erfindungsgemäß wird eine gute mechanische und chemische Haltbarkeit der ITO-Schicht dadurch erreicht, daß Mischoxid-Sperrschichten aus $SiO_2$ mit Oxiden des Tantals, Zirkons, Titans, Aluminiums und Zinns erzeugt werden. Oberdies werden mit diesen Mischoxidschichten erfindungsgemäß alle wichtigen Eigenschaften der ITO-Schicht, insbesondere auch die IR-Reflexion merklich verbessert. So werden Ladungsträgerkonzentrationen von $5,6 \times 10^{20}$ [cm⁻³], spezifische Leitfähigkeiten von 5 800 [$\Omega^{-1}$ cm⁻¹] und Beweglichkeiten von 60 [cm² V⁻¹sec⁻¹] erreicht, was den besten nach anderen Verfahren hergestellten Schichten entspricht. Es stellt einen erheblichen technischen Fortschritt dar, daß dies in dem für Großflächenbelegungen prädestinierten, sehr homogene Schichten liefernden Tauchverfahren ermöglicht wird.

Die Mischoxid-Schichten, deren großer Vorteil in der Verbesserung und Erhaltung guter Eigenscharten der ITO-Schicht liegt, werden dadurch gewonnen, daß hydrolysierbare Verbindungen des Siliziums und eine oder mehrere des Tantals, Zirkons, Titans, Aluminiums und Zinns gemeinsam in Lösung gebracht werden, die Glasscheibe hereingetaucht, gleichmäßig in eine Wasserdampf enthaltende Atmosphäre herausgezogen, getrocknet und bei erhöhter Temperatur bis 450°C ausgehärtet wird. Als hydrolysierbare Verbindungen können Salze organischer oder anorganischer Säuren oder Alkoxide aller genannten Elemente eingesetzt werden, z.B. Acetate, Nitrate, Halogenide, Alkoxide. Die Wahl der Zusammensetzung ist weitgehend frei; sie richtet sich nach dem Anwendungsfall und ist in einfachen Reihenversuchen optimierbar.

Durch welche Reaktionen sich die beiden Schichten positiv beeinflussen, ist nicht bekannt. Wesentlich und ebenfalls erfindungsgemäß ist, daß sich diese Reaktion dadurch verstärken läßt, daß die zuerst aufgebrachte Grundierungsschicht bei nur 200 - 250°C unvollständig ausgehärtet wird, dann die ITO-Schicht aufgezogen wird und bei 400 - 450°C beide Schichten gemeinsam endgültig ausgehärtet werden.

Der Tauchprozeß bei der Herstellung der Sperrschichten erfordert eine möglichst sorgfältige, angepaßte Klimatisierung hinsichtlich Temperatur und Luftfeuchte. Neben der Erzielung verbesserter Eigenschaften bringt dies auch einen wirtschaftlichen Vorteil, denn der Hochtemperaturschritt muß in diesem Falle nur einmal durchlaufen werden. Diese Vorgehensweise ist neu und der Effekt überraschend, denn der Fachmann mußte wegen der bekannten Instabilität nicht ausgehärteter - d. h. noch nicht rein oxidischer Schichten - dem Eintauchen in die ITO-Lösung erhebliche Zweifel entgegenbringen wegen der Möglichkeit eines partiellen Inlösunggehens und der Kontaminierung der ITO-Lösung.

Die ITO-Lösung muß wegen der hohen Kosten des Indiums langzeitstabil sein. Zu ihrer Herstellung werden hydrolysierbare Verbindungen des Indiums und Zinns, wie Salze organischer oder anorganischer Säuren oder Alkoxide, beispielsweise Acetate, Halogenide, Nitrate, Propoxide in Lösungsmitteln oder Lösungsmittelgemischen wie Alkoholen, insbesondere Methanol, Äthanol, Propanol, ggf. unter Zusatz verdünnter Essigsäure, gelöst. Die Wahl des Lösungsmittels richtet sich nach der Wahl der Indium- und Zinn-Ausgangsverbindung und ist in einfachen Reihenversuchen optimierbar. Das Indium-Zinnverhältnis beträgt vorzugsweise bei erwünschter hoher Leitfähigkeit und IR-Reflexion 5,2 - 9,8 Atom-% Sn in $In_2O_3$-$SnO_2$.

In diese Lösung wird nun die vorbeschichtete, bei 450°C oder vorzugsweise bei 200 - 250°C behandelte Glasscheibe eingetaucht, gleichmäßig in eine Wasserdampf enthaltende Atmosphäre herausgezogen, zwischengetrocknet und in einer definierten, reduzierenden Gasatmosphäre bei Temperaturen bis zu 450°C behandelt.

Die reduzierende Behandlung von ITO-Schichten, allerdings von solchen, die in einem Sprühverfahren hergestellt sind, ist bekannt aus der DE-A 19 55 434. Sie erhöht die Leitfähigkeit und IR-Reflexion. In der erwähnten DE-A wird ausdrücklich darauf hingewiesen, daß der Rest-Sauerstoffgehalt der Reduktionsgasatmosphäre nicht höher als $10^{-2}$ Vol.-% betragen darf, weil ansonsten eine Minderung der IR-Reflexion eintritt. Das bedeutet aber die Verwendung weitestgehend abgedichteter Öfen, die in einem üblichen Durchlaufverfahren eine ganz erhebliche Investition und Erschwernis bzw. Verlangsamung des Verfahrens mit sich bringen.

Es wurde überraschend gefunden, daß es erfindungsgemäß möglich ist, mit handelsüblichen Gasen zu arbeiten, einen hohen Sauerstoffanteil bis zu 2 Vol.-% zuzulassen und als Konsequenz daraus mit nicht sorgfältig abgedichteten Aushärteöfen arbeiten zu können. Erfindungsgemäß wird als Reduktionsgas das übliche Formiergas (Stickstoff:Wasserstoff 90:10) mit Restsauerstoffgehalten von 0,1 - 2 Vol.-% und zulässigen, normalerweise vorliegenden Spuren von Wasser verwandt.

Diese relativ hohen Sauerstoffgehalte bringen allerdings ein zusätzliches Problem mit sich, das ebenfalls erfindungsgemäß gelöst werden mußte. Bei Temperaturen > 400°C kann sich ein bedeutender Teil des Sauerstoffs mit Wasserstoff an den heißen Ofenwänden zu Wasser umsetzen und so die Gaszusammensetzung ständig verändern. Dies sind stark katalytisch beeinflußte Effekte. Verwendet man jedoch als Ofenwandmaterial den Stahl St 4724, so treten diese Reaktionen erst bei Temperaturen > 500°C merklich auf. Die zur Aushärtung der ITO-Schicht erforderliche Temperatur liegt darunter. Es ist ebenfalls möglich, katalytisch inaktives Kieselglas als Ofenwandmaterial zu verwenden und mit kurzwelligen Strahlern die beschichtete Glasscheibe durch das Kieselglas hindurch aufzuheizen. Bei dieser Vorgehensweise bleibt die Temperatur des Ofenwandmaterials erheblich unterhalb der Temperatur der beschichteten Glasscheibe. Bei der Abkühlung wird die ITO-Scheibe bis zu 200°C in der Reduktionsgasatmosphäre belassen.

Bei der beschriebenen Vorgehensweise werden Schichten mit IR-Reflexionen bei 9,5 μm bis zu 85 %, Transmission im Sichtbaren bei 550 nm bis zu 96 % und Flächenwiderständen bis unter 20 Ω / □ erreicht. Die spezifische Leitfähigkeit solcher Schichten liegt zwischen 1000 - 5800 [$\Omega^{-1}cm^{-1}$], die Ladungskonzentrationen zwischen 3 - 6 x $10^{20}$ [ $m^{-3}$ ] und die Beweglichkeiten liegen bei 10 - 60 [$cm^2$ V $^{-1}$ $sec^{-1}$]. Welche Schichtqualität jeweils gewünscht wird, z.B. wie oben erwähnt für Fenster oder Displays, läßt sich ohne Veränderung der Lösung oder des Verfahrens über die Schichtdicke steuern. Diese ist - wie bekannt - u.a. eine Funktion der Ziehgeschwindigkeit beim Austauchen. Auch diese einfache Variationsfähigkeit ist ein erheblicher Vorteil des Verfahrens gemäß der Erfindung.

Die Erfindung wird anhand der nachfolgenden Beispiele näher erläutert:

**Beispiel 1: Herstellung einer Sperrschichtlösung (450°C)**

25 ml Kieselsäuretetramethylester, 200 ml Äthanol, 25 ml dest. Wasser und 2,5 ml konz. Essigsäure werden in der angegebenen Reihenfolge zusammengegeben und gut durchmischt. Die Mischung bleibt bei RT über Nacht stehen. Danach wird $ZrOCl_2$ in Äthanol gelöst zugegeben (g $SiO_2$ : g $ZrO_2$ = 2 : 1) und auf 500 ml mit Äthanol aufgefüllt.

**Beispiel 2: Herstellung einer Sperrschichtlösung (250°C)**

25 ml Kieselsäuretetramethylester, 100 ml Äthanol, 40 ml dest. Wasser und 2,7 ml konz. Essigsäure werden in der angegebenen Reihenfolge zusammengegeben und gut durchmischt. Die Mischung bleibt 72 h bei RT stehen. Danach wird Titanbutylat in Äthanol gelöst zugegeben und mit Äthanol auf 400 ml Äthanol aufgefüllt.

**Beispiel 3: Herstellung einer Sperrschicht**

Eine sorgfältig gereinigte Floatglasscheibe wird a) in eine Lösung gemäß Beispiel 1 b) in eine Lösung gemäß Beispiel 2 getaucht und mit einer Geschwindigkeit von 0,6 cm/sec herausgezogen in eine Atmosphäre, die Wasserdampf > 7 g/m³ enthält. Es wird bei 250°C kurz getrocknet, und die a) entstammende Scheibe wird 5 min auf 450°C, die b) entstammende Scheibe 5 min auf 250°C erhitzt. Beide Schichten werden gemäß Beispiel 5 mit ITO überschichtet.

**Beispiel 4: Herstellung einer ITO-Lösungung**

95 g Indium-III-iso-Propylat werden mit 100 ml Isopropenol und mit 4,8 g Zinn-IV-butylat unter Rühren versetzt. Anschließend werden 6 ml Acetylaceton zugegeben, und die Mischung wird auf 500 ml Gesamtlösung mit Äthanol verdünnt.

**Beispiel 5: Herstellung einer ITO-Lösung**

65 g Indium-III-nitrat werden in Äthanol gelöst und mit 3,1 g $SnCl_4$ x $5H_2O$, ebenfalls in Äthanol gelöst, versetzt und anschließend wird mit Äthanol auf 500 ml Gesamtlösung verdünnt.

**Beispiel 6: Herstellung einer ITO-Schicht**

Die gemäß Beispiel 3 nach a) und b) vorbeschichteten Scheiben werden in eine Lösung gemäß Beispiel 4 getaucht, mit einer Geschwindigkeit von 0,8 cm/sec in eine Atmosphäre heraus: gezogen, die > 10 g/m³ Wasserdampf enthält, bei 250°C 5 min getrocknet und in einer Reduktionsgasatmosphäre (Gaszusammensetzung: $N_2$:$H_2$ = 90:10 + 0,1 - 3 Vol. % $O_2$) in einem Ofen aus St 4724 15 min bis auf 450°C erhitzt, in der Reduktionsgasatmosphäre auf 200°C abkühlen gelassen und dem Ofen entnommen. Die ITO-Schicht weist folgende typische Eigenschaften auf:
  Schichtdicke [ nm ] 100
  Flächenwiderstand[$\Omega$/□] 25
  spez. Leitfähigkeit [$\Omega^{-1}cm^{-1}$]5 800
  Beweglichkeit [$cm^2$/V sec] 60
  Ladungsträgerkonzentration [$cm^{-3}$] 5,6 x $10^{20}$
  Reflexion bei 9,5µm (%) $\geq$ 80 %
  Transmission bei 550 nm(%)> 90 %
  Farbwiedergabeindex > 96 > >ärte. ~
eisenhart

**Beispiel 7: Herstellung einer ITO-Schicht**

Es wird analog Beispiel 5 gearbeitet; nur die Ziehgeschwindigkeit beträgt 0,3 cm/sec. Die ITO-Schicht weist folgende Eigenschaften auf:
  Schichtdicke [nm] 40
  Flächenwiderstand [$\Omega$ / □ ] 70
  spez. Leitfähigkeit [$\Omega^{-1}cm^{-1}$] 1700
  Beweglichkeit [$cm^2$/V sec] 30
  Ladungsträgerkonzentration [$cm^{-3}$], 3,5 x $10^{,20}$
  Transmission bei 550 nm (%) $\geq$ 96 %
  Untersuchung der Stabilität der ITO-Schichten:
  I Schichten nach Beispiel 6 und 7 wurden 24 h auf 150°C aufgeheizt. Eine Veränderung des Flächenwiderstandes konnte nicht beobachtet werden.
  II Schichten nach Beispiel 6 und 7 wurden 1 Jahr bei 50°C in dest. $H_2O$ gelagert, ohne daß eine Schichtveränderung beobachtet werden konnte. Ebenso blieb der Flächenwiderstand in dieser Zeit unverändert.
  III Schichten nach Beispiel 6 und 7 wurden 100 h in dest. $H_2O$ gekocht. Es konnte keine Schichtveränderung beobachtet werden.
  IV Schichten nach Beispiel 6 und 7 wurden einem Wechselklima nach DIN 52 344 ausgesetzt. Es konnten keine Schichtveränderungen beobachtet werden.
  V Schichten nach Beispiel 6 und 7 wurden 24 h in 1 %iger $H_2SO_4$ bei RT gelagert. Es konnten keine Schichtveränderungen beobachtet werden.
  VI Schichten nach Beispiel 6 und 7 wurden 5 h in einer wasserdampfhaltigen $SO_2$-Atmosphäre bei 50°C gelagert. Es konnte nach dieser Zeit kein Angriff auf die Schichten beobachtet werden.
  VII Schichten nach Beispiel 6 und 7 wurden dem 4 900 h Xenotest (Xenon-Strahler XE 1500) (1 500 W, Filter KG-3, Abstand 10 cm) unterworfen. Es konnte keine Schichtveränderung festgestellt werden.

VIII Schichten nach Beispiel 6 und 7 wurden 2 Jahre außenbewittert:

x) Industrieklima (Rhein-Main-Gebiet): Nach 2 Jahren keine Veränderung der Schichten.

xx) Industriefreies mediterranes Klima (Ibiza): Nach 2 Jahren keine Veränderung der Schichten.

**Beispiel 8:** Isolierglas mit ITO

Eine nach Beispiel 6 hergestellte Schicht, eingebaut in ein Isolierglas, führt zu folgenden Werten des Fenstersystems.

System:
Floatglas 6 mm 12 mm Abstand Floatglas 6 mm
Gas = Argon ITO-beschichtet
Lichttransmission (%) 83
Farbwiedergabeindex 97.
Gesamtenergiedurchgang (%) 74
k (W/m$^2$K) 1,8
k+ (W/m$^2$K) bei Berück- 1,5
sichtigung der doppel
seitigen Beschichtung-

**Patentansprüche**

1. Verfahren zur Herstellung von transparenten, elektrisch leitfähigen, infrarotreflektierenden Indiumoxid-Zinnoxid-Schichten nach dem Tauchverfahren, dadurch gekennzeichnet,

a) daß ein Substrat in eine erste Lösung getaucht wird, die eine hydrolysierbare Siliziumverbindung und eine oder mehrere hydrolysierbare Verbindungen des Titans, Zirkons, Aluminiums, Zinns oder Tantals enthält,

b) daß dieses Substrat gleichmäßig in eine Feuchtigkeit enthaltende Atmosphäre herausgezogen und

c) auf Temperaturen bis maximal 450°C erhitzt und/oder bei Temperaturen zwischen 200°C und 250°C unvollständig ausgehärtet wird,

d) worauf dieses vorbeschichtete Substrat in eine zweite Lösung getaucht wird, die hydrolysierbare Verbindungen des Indiums und des Zinns enthält,

e) gleichmäßig in eine Feuchtigkeit enthaltende Atmosphäre herausgezogen wird und

f) gegebenenfalls bei Temperaturen unterhalb 250°C getrocknet wird,

g) und daß abschließend das Substrat auf Temperaturen bis maximal 500°C in einer reduzierenden Atmosphäre, die Wasserdampf und gegebenenfalls bis zu 3 Vol.-% Sauerstoff enthält, erhitzt wird.

2. Verfahren nach Anspruch 1, dadurch gekennzeichnet, daß dieses Substrat eine Glasscheibe ist.

3. Verfahren nach Anspruch 2, dadurch gekennzeichnet, daß eine Scheibe aus alkalihaltigem Glas, vorzugsweise eine Floatglasscheibe verwendet wird.

4. Verfahren nach einem der Ansprüche 1 bis 3, dadurch gekennzeichnet, daß als Siliziumverbindung in der ersten Tauchlösung ein Kieselsäureester, vorzugsweise Kieselsäuremethyl- oder Kieselsäureäthylester, und als Verbindung des Titans, Zirkons, Aluminiums, Zinns oder Tantals ein Salz einer anorganischen oder organischen Säure oder ein Alkoxid, vorzugsweise des Methanols oder Äthanols verwendet wird.

5. Verfahren nach einem der Ansprüche 1 bis 4, dadurch gekennzeichnet, daß in der Stufe c) das Substrat auf Temperaturen bis 250°C erhitzt wird.

6. Verfahren nach einem der Ansprüche 1 bis 5, dadurch gekennzeichnet, daß in der zweiten Lösung (Stufe d) als Verbindungen des Indiums und des Zinns Salze anorganischer oder organischer Säuren oder Alkoxide, vorzugsweise des Methanols; Äthanols oder Propanols verwendet werden.

7. Verfahren nach Anspruch 6, dadurch gekennzeichnet, daß der Gehalt dieser Lösung an Sn 5,2 - 9,8 Atom-%, bezogen auf In$_2$O$_3$-SnO$_2$ beträgt.

8. Verfahren nach einem der Ansprüche 1 bis 7, dadurch gekennzeichnet, dsß die Stufe g) in einer Reduktionsgasatmosphäre durchgeführt wird, die Stickstoff, Wasserstoff, Sauerstoff und Wasser enthält.

9. Verfahren nach Anspruch 8, dadurch gekennzeichnet, daß das Verhältnis N$_2$:H$_2$ in der Gasatmosphäre 90:10 und der Sauerstoffgehalt 0,2-2,0 Vol.-% beträgt.

10. Verfahren näch einem der Ansprüche 1 bis 9, dadurch gekennzeichnet, daß die Stufe g) in einem nicht hermetisch abgeschlossenen System durchgeführt wird.

11. Verfahren nach einem der Ansprüche 1 bis 10, dadurch gekennzeichnet, daß die Stufe g) in einem Ofen durchgeführt wird, dessen Wände zumindest teilweise aus Stahl St 4724 bestehen.

12. Verfahren nach einem der Ansprüche 1 bis 10, dadurch gekennzeichnet, daß die Stufe g) in einem Ofen durchgeführt wird, dessen Wände zumindest teilweise aus Quarzglas bestehen, und daß das Substrat durch diese Wände hindurch mittels Kurzwellenstrahlern erhitzt wird.

13. Fensterscheibe mit einer Indiumoxid-Zinnoxid-Schicht, hergestellt mit einem Verfahren gemäß einem der Ansprüche 1-12, gekennzeichnet durch folgende Eigenschaften:
Transmission (550 nm) ⩾ 90 %
Reflexion (9,5 μm) > 80 %
Schichteigenschaften (bei einer Schicht dicke von 100 [nm]:
Flächenwiderstand 25 [Ω /□]
Leitfähigkeit 5800 [Ω$^{-1}$cm$^{-1}$]
Ladungsträgerkonzentration 5,6 x 10$^{20}$ [cm$^{-3}$]
Beweglichkeit 60 [cm$^2$ V$^{-1}$ sec. $^{-1}$]. >

14. Isolierglasfenster, dadurch gekennzeichnet, daß ihredem Raum zugewandte Scheibe beidseitig mit einer Schicht versehen ist, die gemäß den Verfahren nach den Ansprüchen 1 bis 12 erzeught worden ist und die in Anspruch 13 genannten Eigenschaften aufweist.

15. Glasscheibe mit einer Indiumoxid-Zinnoxid-Displayschicht, hergestellt mit einem Verfahren gemäß einem der Ansprüche 1-12, gekennzeichnet durch folgende Schichteigenschaften

Schichtdicke 40 [nm]:
Flächenwiderstand 70[ $\Omega$ / $\square$]
Leitfähigkeit 1700 [$\Omega^{-1}$ cm$^{-1}$]
Beweglichkeit 30 [cm$^2$ / V$^{-1}$ secs]
Ladungsträgerkonzentration 3,5 x 10$^{20}$ [cm$^{-3}$]
Transmission (der Scheibe) (550 nm) 96 %.

## Claims

1. A process for the production of transparent, electrically conductive, infrared-reflecting indium oxide - tin oxide layers using the dipping method, characterized in that

a) a substrate is dipped into a first solution containing a hydrolizable silicon compound and one or more hydrolyzable compounds of titanium, zirconium, aluminium, tin, or tantalum,

b) the said substrate is uniformly drawn out into a moisture-containing atmosphere and

c) is heated to temperatures of up to maximally 450° C and/or is incompletely hardened at temperatures between 200° C and 250° C,

d) whereupon the said initially coated substrate is dipped into a second solution containing hydrolyzable compounds of indium and of tin,

e) is uniformly drawn out into a moisture-containing atmosphere and

f) is optionally dried at temperatures of below 250° C, and

g) finally the substrate is heated to temperatures of up to maximally 500° C in a reducing atmosphere containing steam and optionally up to 3 vol-% of oxygen.

2. A process according to claim 1, characterized in that said substrate is a glass pane.

3. A process according to claim 1, characterized in that a pane of an alkali-containing glass, preferably a float glass pane, is used.

4. A process according to one of claims 1 - 3, characterized by using as silicon compound in the first dippIng solution a silicic acid ester, preferably silicic acid methyl or silicic acid ethyl ester, and as the compound of titanium, zirconium, aluminium, tin, or tantalum a salt of an inorganic or organic acid or an alkoxide, preferably of methanol or ethanol.

5. A process according to one of claims 1 - 4, characterized in heating the substrate in step c) to temperatures of up to 250° C.

6. A process according to one of claims 1 - 5, characterized in using in the second solution (step d) as compounds of indium and of tin, salts of inorganic or organic acids or alkoxides, preferably of methanol, ethanol or propanol.

7. A process according to claim 6, characterized in that the content in this solution of Sn is 5,2 - 9,8 atom-%, based on $In_2O_3$ - $SnO_2$.

8. A process according to one of claims 1 - 7, characterized in that the step g) is conducted in a reducing gas atmosphere containing nitrogen, hydrogen, oxygen and water.

9. A process according to claim 8, characterized in that the ratio of $N_2$:$H_2$ in the gaseous atmosphere is 90:10 and the oxygen content is 0,2 - 2,0 vol -%.

10. A process according to one of claims 1 - 9, characterized by conducting the step g) in a system which is not hermetically sealed.

11. A process according to one of claims 1 - 10, characterized by conducting the step g) in a furnace, the walls of which at least partially consist of steel St 4724.

12. A process according to one of claims 1 - 10, characterized by conducting the step g) in a furnace, the walls of which consist at least in part of quartz glass, and by heating the substrate through the said walls by means of short-wave radiators.

13. A window pane with an indium oxide - tin oxide layer, produced by a process according to one of claims 1 - 12, and having the following properties:

transmission (550 nm) $\geqslant$ 90 % > > eflection (9,5 µm) > 80 %
coating properties (with a coating thickness of 100 [nm]):
surface resistance 25 [$\Omega$ /$\square$]
conductivity 5800 [$\Omega^{-1}$ cm$^{-1}$]
charge carrier concentration 5,6 x 10$^{20}$ [cm$^{-3}$]
mobility 60 [cm$^2$ V$^{-1}$ sec$^{-1}$]

14. An insulating glass window, characterized in that its pane facing the room is bilaterally provided with a coating produced according to the process of claims 1 - 12, and having the properties cited in claim 13.

15. A glass pane with an indium oxide - tin oxide display layer, produced by a process according to one of claims 1 - 12, and having the following coating properties:

coating thickness 40 [nm]:
surface resistance 70 [$\Omega$ /$\square$]
conductivity 1700 [$\Omega^{-1}$ cm $^{-1}$]
mobility 30 [cm$^1$ V$^{-1}$ sec$^{-1}$]
charge carrier concentration 3,5 x 10$^{20}$ [cm $^{-3}$]
transmission (of pane) (550 nm) 96 %.

## Revendications

1. Procédé pour la réalisation de couches d'oxyde d'indium-oxyde d'étain transparentes, électriquement conductrices, réfléchissant dans l'infrarouge, par le procédé par immersion, caractérisé

a) en ce qu'on immerge un substrat dans une première solution qui contient un composé hydrolysable du silicium et un ou plusieurs composés hydrolysables du titane, du zirconium, de l'aluminium, de l'étain ou du tantale,

b) en ce que l'on extrait ce substrat, à vitesse constante, dans une atmosphère contenant de l'humidité, et

c) qu'on le chauffe à des températures maximales de 450°C et/ou qu'on le durcit d'une manière incomplète à des températures comprises entre 200 et 250°C,

d) puis en ce qu'on immerge ce substrat pré-revêtu dans une deuxième solution qui contient des composés hydrolysables de l'indium et de l'étain,

e) qu'on l'extrait à vitesse constante dans une atmosphère contenant de l'humidité et

f) qu'on le sèche éventuellement à des températures inférieures à 250°C,

g) et en ce que, pour terminer, on chauffe le substrat à des températures maximales de 500°C dans une atmosphère réductrice contenant de la vapeur d'eau et éventuellement jusqu'à 3 % en volume d'oxygène.

2. Procédé selon la revendication 1, caractérisé en ce que le substrat est une plaque de verre.

3. Procédé selon la revendication 2, caractérisé en ce qu'on utilise une plaque en verre contenant des métaux alcalins, de préférence une plaque de verre flotté.

4. Procédé selon l'une des revendications 1 à 3, caractérisé en ce qu'on utilise comme composé du silicium dans la première solution d'immersion un silicate, de préférence du silicate de méthyle ou du silicate d'éthyle et comme composé du titane, du zirconium, de l'aluminium, de l'étain ou du tantale un sel d'un acide organique ou inorganique, ou un alcoxyde, de préférence du méthanol ou de l'éthanol.

5. Procédé selon l'une des revendications 1 à 4, caractérisé cn ce que, dans l'étape c), on chauffe le substrat à des températures allant jusqu'à 250°C.

6. Procédé selon l'une des revendications 1 à 5, caractérisé en ce qu'on utilise dans la deuxième solution (étape d), comme composés de l'indium et de l'étain, des sels d'acides inorganiques ou organiques ou des alcoxydes, de preférence du méthanol, de l'éthanol ou du propanol.

7. Procédé selon la revendication 6, caractérisé en ce que la teneur de cette solution en Sn est de 5,2-9,8 %-atomique par rapport à $In_2O_3$-$SnO_2$.

8. Procédé selon l'une des revendications 1 à 7, caractérisé en ce que l'étape g) est réalisée dans une atmosphère de gaz réducteur contenant de l'azote, de l'hydrogène, de l'oxygène et de l'eau.

9. Procédé selon la revendication 8, caractérisé en ce que le rapport $N_2$:$H_2$ de l'atmosphère gazeuse est de 90:10 et que la teneur en oxygène est de 0,2-2,0 % en volume.

10. Procédé selon l'une des revendications 1 à 9, caractérisé en ce que l'étape g) est réalisée dans un système fermé d'une manière non-hermétique.

11. Procédé selon l'une des revendications 1 à 10, caractérisé en ce que l'étape g) est réalisée dans un four dont les parois sont au moins partiellement en acier St 4724.

12. Procédé selon l'une des revendications 1 à 10, caractérisé en ce que l'étape g) est réalisée dans un four dont les parois sont au moins en partie en verre quartzeux, et que le substrat est chauffé au travers de ces parois à l'aide de radiateurs émettant des rayonnements de faible longueur d'onde.

13. Vitre pour fenêtre avec une couche d'oxyde d'indium-oxyde d'étain, réalisée par un procédé selon l'une des revendications 1 à 12, caractérisée par les propriétés suivantes-:

Facteur de transmission (550 nm) $\geq$ 90 %

Facteur de réflexion (9,5 µm) > 60 %

Propriétés de la couche (pour une épaisseur de couche de 100 nm):

Résistance carrée: 25 $\Omega$

Conductivité 5800 $\Omega^{-1}cm^{-1}$

Concentration des porteurs de charge: $5,6.10^{20}$ $cm^{-3}$

Mobilité 60 $cm^2V^{-1}s^{-1}$

14. Fenêtre en verre isolant, caractérisée en ce que sa vitre dirigée vers l'extérieur est pourvue sur ses deux faces d'une couche qui a été réalisée par les procédés selon les revendications 1 à 12, et qui présente les propriétés données dans la revendication 13.

15. Plaque de verre possédant une couche d'affichage en oxyde d'indium-oxyde d'étain, réalisée par un procédé selon l'une des revendications 1 à 12, caractérisée par les propriétés de couche suivantes:

Epaisseur de couche 40 nm

Résistance carrée 70 $\Omega$

Conductivité 1700 $\Omega^{-1}cm^{-1}$

Mobilité 30 $cm^2/V$ s

Concentration des porteurs de charge $3,5.10^{20}$ $cm^{-3}$

Facteur de transmission de la plaque de verre (550 nm) 96 %.